# EUROPÄISCHE PATENTSCHRIFT

(11) **EP 0 792 224 B1**
(45) Veröffentlichungstag und Bekanntmachung des Hinweises auf die Patenterteilung: **13.09.2000**
(21) Anmeldenummer: 95934097.7
(22) Anmeldetag: 22.09.1995
(51) Int. Cl.: B60T 8/00

(54) **SCHALTUNGSANORDNUNG FÜR EINE BREMSANLAGE MIT BLOCKIERSCHUTZREGELUNG**
CIRCUIT ARRANGEMENT FOR A BRAKING SYSTEM WITH ANTILOCK CONTROL SYSTEM
CIRCUIT DE COMMANDE POUR SYSTEME DE FREINAGE A REGULATION ANTIBLOCAGE

(30) Priorität: 23.11.1994 DE 4441624
(43) Veröffentlichungstag der Anmeldung: 03.09.1997
(73) Patentinhaber: Continental Teves AG & Co. oHG, 60488 Frankfurt (DE)
(72) Erfinder: STRIEGEL, Thomas, D-65835 Liederbach (DE); LEHMER, Ronald, D-61449 Steinbach (DE); EHMER, Norbert, D-65760 Eschborn (DE); WOYWOD, Jürgen, D-64542 Mörfelden (DE)
(86) Internationale Anmeldenummer: EP9503738
(87) Internationale Veröffentlichungsnummer: WO9615924

(56) Entgegenhaltungen:
- EP-A- 0 435 114
- FR-A- 2 442 165
- US-A- 5 315 518

## Beschreibung

Die Erfindung bezieht sich auf eine Schaltungsanordnung, die für eine Kraftfahrzeugbremsanlage mit elektronischer Blockierschutzregelung vorgesehen ist, zur Erhöhung der Fahrstabilität in kritischen Fahrsituationen dient und die mit Schaltkreisen zur individuellen Regelung des Bremsdruckes in den Radbremsen der Vorderräder in Abhängigkeit von dem Drehverhalten der Räder sowie zur Beschränkung von Giermomenten, die infolge von Bremsmanövern auf Fahrbahnen mit unterschiedlichem Reibbeiwert rechts/links auftreten, ausgerüstet ist. Es kann sich dabei um eine festverdrahtete oder um eine programmgesteuerte Schaltung, oder von Mischformen, handeln.

Aus der DE 39 25 828 A1 ist bereits eine derartige Schaltungsanordnung bekannt. Es wird ein Antiblockierregelsystem mit individueller Regelung des Bremsdruckes an den beiden Rädern einer Achse beschrieben. Zur Beschränkung des Giermomentes auf µ-split-Fahrbahnen wird die Bremsdruckdifferenz an den beiden Rädern einer Achse begrenzt, wobei die zulässige Bremsdruckdifferenz in Abhängigkeit von dem Reibbeiwertunterschied und von der Höhe des niedrigeren Reibbeiwertes bestimmt wird. Beim Überschreiten der zulässigen Druckdifferenz wird unter Berücksichtigung des Bewegungszustandes des LM-Rades, d.h. des Rades auf der Seite niedrigeren Reibbeiwertes, der Bremsdruck an dem HM-Rad, also an dem anderen Rad der gleichen Achse, abgebaut. Zur Bestimmung der zulässigen Druckdifferenz wird bei diesem bekannten Antiblockierregelsystem der vom Fahrer eingesteuerte Druck an dem rechten und an dem linken Rad gemessen und jeweils der Soll-Druck mit dem Ist-Druck verglichen. Auf Basis des Bremsdrukkes wird der Reibbeiwert abgeschätzt.

Ferner ist in der DE 41 14 734 A1 bereits eine Schaltungsanordnung für eine Blockierschutzregelung mit individueller Bremsdruckregelung und Giermomentenbeschränkung beschrieben, die darauf beruht, daß fortlaufend aus den Druckabbausignalen ein die Druckdifferenz an den beiden Rädern einer Achse wiedergebender Wert ermittelt und bei µ-split-Bedingungen der mittlere Druckaufbaugradient an dem HM-Rad in Abhängigkeit von der Druckdifferenz und von der Fahrzeugverzögerung variiert wird und daß zum Zeitpunkt des Auftretens der sogen. Giermomentenspitze der Bremsdruck an dem HM-Rad um einen von der Fahrzeugverzögerung und der Druckdifferenz abhängigen Wert reduziert wird.

Mit den vorgenannten bekannten Maßnahmen läßt sich in bestimmten, besonders kritischen Situationen das Entstehen von Giermomenten gefährlicher Höhe nicht vollständig verhindern. Beispielsweise kommt es auf Fahrbahnen mit wechselnden Reibbeiwerten, sogen. µ-Flecken-Fahrbahnen, infolge wechselnder dynamischer Achslastverteilung und damit verbundener Änderung der Radaufstandskräfte zu unterschiedlichen Blockierdruckniveaus in den einzelnen Radbremsen. Treten diese Änderungen zwischen rechter und linker Fahrbahnseite auf, führen sie zu Giermomenten, welche die Fahrstabilität gefährden können.

Speziell bei Fahrzeugen mit kurzem Radstand und Vorderradantrieb kann die Hinterachse allein die Aufrechterhaltung der Fahrstabilität nicht gewährleisten.

Die bisherigen Lösungen beruhen im Prinzip darauf, beim Anbremsen auf µ-split-Fahrbahnen durch einen verlangsamten Bremsdruckanstieg am HM-Vorderrad das Entstehen von Giermomenten zu verlangsamen, um dem Fahrer Zeit zur Gegenreaktion, d.h. zum Gegenlenken zu geben. Wechselt jedoch der Reibbeiwert, insbesondere von hohem Wert zu niedrigem, kommt es zu den beschriebenen Effekten.

Der Erfindung liegt nun die Aufgabe zugrunde, das Entstehen gefährlicher Giermomente auch in bestimmten, besonders kritischen Fahrsituationen, vor allem beim Einlauf aus hohem, homogenen Reibbeiwert in eine µ-split-Fahrbahn oder bei Bremsmanövern auf µ-Flecken-Fahrbahnen, zu verhindern und dadurch auch in solchen Fahrsituationen die Fahrstabilität entscheidend zu erhöhen.

Es hat sich herausgestellt, daß diese Aufgabe durch die im Anspruch 1 beschriebene Schaltungsanordnung gelöst werden kann. Das Besondere der erfindungsgemäßen Schaltungsanordnung besteht also darin, daß in bestimmten kritischen Fahrsituationen, insbesondere beim Einlauf in eine µ-split-Fahrbahn oder bei Bremsmanövern auf µ-Flecken-Fahrbahnen, und Erkennen von vorgegebenen Kriterien für eine solche kritische Fahrsituation eine Sonderregelung gestartet wird, die einen Bremsdruckabbau in der Radbremse des auf höherem Reibbeiwert laufenden Vorderrades, des sogen. "HM-Rades", für eine vorgegebene, von der Fahrzeuggeschwindigkeit oder Fahrzeugreferenzgeschwindigkeit abhängige Zeitdauer herbeiführt.

Erfindungsgemäß wird also zunächst festgestellt, ob eine bestimmte, besonders kritische Fahrsituation vorliegt, und es wird auf eine nur für diese Situation geeignete Sonderregelung umgeschaltet, mit der zugunsten der Fahrstabilität der Bremsdruck an dem HM-Rad einmalig - bei µ-Flecken-Fahrbahnen auch mehrmals - abgebaut wird. In manchen Fällen und bei manchen Fahrzeugtypen ist es hilfreich, gleichzeitig auch den Bremsdruck an den Hinterrädern abzubauen.

Nach einem vorteilhaften Ausführungsbeispiel der Erfindung wird eine Fahrsituation dann als kritisch bewertet bzw. als kritisch erkannt, wenn eine oder mehrere der folgenden Kriterien gleichzeitig erfüllt sind:
Die Bremsdruckdifferenz bzw. die Bremsdruckabbauzeiten-Differenz an den Vorderrädern überschreitet einen vorgegebenen Bremsdruckdifferenz-Grenzwert,
die Fahrzeuggeschwindigkeit oder Fahrzeugreferenzgeschwindigkeit liegt über einem vorgegebenen Geschwindigkeits-Grenzwert,
der Schlupf des auf der Seite mit niedrigerem Reibbeiwert laufenden Vorderrades, des sogen. "LM-Rades", liegt über einem von der Fahrzeug(referenz)geschwindigkeit abhängigen Schlupf-Grenzwert,
die Zeitdauer der Instabilität des LM-Rades überschreitet eine vorgegebene Zeitdauer,
das HM-Rad befindet sich im Regelungs-Modus oder die Fahrzeugverzögerung liegt über einem vorgegebenen Verzögerungs-Grenzwert und es fand während des momentanen Radvorgangs noch keine Sonderregelung statt.

Das Einleiten der Sonderregelung wird nur zugelassen, wenn eindeutig erkannt ist, ob eine bestimmte kritische Situation vorliegt. In manchen Fällen ist es günstig, die Fahrsituation nur dann als kritisch zu bewerten, wenn alle aufgezählten Kriterien erfüllt sind.

Nach einem weiteren vorteilhaften Ausführungsbeispiel ist die erfindungsgemäße Schaltungsanordnung derart ausgelegt, daß die Sonderregelung während eines Bremsmanövers beim erneuten Erkennen einer kritischen Fahrsituation oder beim Andauern der kritischen Fahrsituation wiederholt wird, wenn zuvor die Bremsdruckdifferenz bzw. die Bremsdruckabbauzeitendifferenz den vorgegebenen Grenzwert mit umgekehrten Vorzeichen überschritten hat bzw. wenn ein Wechsel der Reibbeiwert-Verhältnisse rechts/links eingetreten ist. Dieses Ausführungsbeispiel bezieht sich also auf die sogen. µ-Flecken-Fahrbahnen.

Weiterhin ist es vorgesehen, die Sonderregelung nicht auszulösen bzw. zu verhindern, wenn während eines Bremsmanövers eine Wiederbeschleunigung des LM-Rades ermittelt wird, die über einem vorgegebenen ersten Beschleunigungsgrenzwert liegt. Dieser Wiederbeschleunigungsgrenzwert wird zweckmäßigerweise auf einen Wert zwischen 5 und 10 g festgelegt. Eine solch hohe Wiederbeschleunigung ist nämlich ein Indiz für hohen Reibbeiwert, so daß es sich hier nicht um das LM-Rad handeln kann.

Die Sonderregelung wird zweckmäßigerweise sofort unterbrochen, wenn eine oder mehrere der vorgegebenen Kriterien für das Erkennen einer kritischen Fahrsituation nicht mehr erfüllt sind. Die Sonderregelung wird beendet, wenn während des Ablaufs dieser Sonderregelung eine Wiederbeschleunigung des LM-Rades über etwa 10 bis 30 g auftritt.

Ein weiteres Ausführungsbeispiel der Erfindung besteht darin, daß die Zeitdauer des Bremsdruckabbaues infolge der Sonderregelung bei einer Fahrzeuggeschwindigkeit zwischen 30 und 50 km/h auf einen Wert zwischen 20 und 40 msec begrenzt wird und daß bei höherer Geschwindigkeit diese Zeitdauer in Stufen oder kontinuierlich auf Werte bis etwa 50 bis 70 msec erhöht wird.

Ferner hat es sich als zweckmäßig erwiesen, den Schlupfgrenzwert bei einer Fahrzeuggeschwindigkeit von etwa 40 km/h auf einen Wert zwischen 60 und 70% festzulegen und diesen Wert mit höherer Geschwindigkeit linear oder in Stufen bis zu einem Grenzwert von etwa 40% zu reduzieren.

Die erfindungsgemäße Schaltungsanordnung wird nach dem heutigen Erkenntnisstand zweckmäßigerweise mit einem elektronischen Regler verwirklicht, der programmgesteuerte Schaltungen, wie Mikroprozessoren, Mikrocontroller usw. enthält. Dieser Regler ist Bestandteil eines Blockierschutzregelungssystems, das eine hydraulische Bremsanlage mit elektrisch betätigbaren Hydraulikventilen und mit Sensoren zur Ermittlung des Drehverhaltens der Fahrzeugräder enthält. Die programmierten Schaltungen dienen zur Auswertung der Sensorsignale sowie zum Erzeugen von Bremsdrucksteuersignalen und sind derart programmiert, daß der Bremsdruck in den Radbremsen der Vorderräder individuell in Abhängigkeit von dem Drehverhalten der Räder gesteuert wird und dabei ein durch Fahrmanöver auf µ-split-Fahrbahnen hervorgerufenes Giermoment beschränkt wird. Durch entsprechende Programmierung wird erreicht, daß beim Erkennen der sogen. kritischen Fahrsituationen anhand der zuvor erläuterten Kriterien die Sonderregelung gestartet wird, die den Bremsdruckabbau am HM-Rad und ggf. auch an den Hinterrädern für die vorgegebene, von der Fahrzeuggeschwindigkeit abhängige Zeitdauer herbeiführt. Auch alle anderen vorgenannten vorteilhaften Ausführungsarten der Erfindung lassen sich durch die programmgesteuerten Schaltungen realisieren.

Weitere Einzelheiten der Erfindung gehen aus der folgenden Beschreibung von Ausführungsbeispielen anhand der beigefügten Abbildungen und Diagramme hervor.

Es zeigen
- Fig. 1: in schematisch vereinfachter Darstellung die wichtigsten Komponenten bzw. Funktionsblöcke einer Schaltungsanordnung nach der Erfindung,
- Fig. 2: im Diagramm den Bremsdruckverlauf an den beiden Vorderrädern in der symbolisch dargestellten Fahrsituation (µ-Sprung) gemäß einem Ausführungsbeispiel der Erfindung,
- Fig. 3: in gleicher Darstellungsweise wie Fig. 2 den Bremsdruckverlauf an den beiden Vorderrädern in einer anderen, ebenfalls symbolisch dargestellten Fahrsituation (µ-Flecken-Fahrbahn),
- Fig. 4: im Diagramm die Abhängigkeit der Druckabbauzeit von der Fahrzeug(referenz)geschwindigkeit,
- Fig. 5: im Diagramm den Verlauf des vorgegebenen Schlupf-Grenzwertes in Abhängigkeit von der Fahrzeug(referenz)geschwindigkeit und
- Fig. 6: ein Flow-Chart zur Veranschaulichung der Arbeitsweise der Schaltungsanordnung nach Fig. 1.

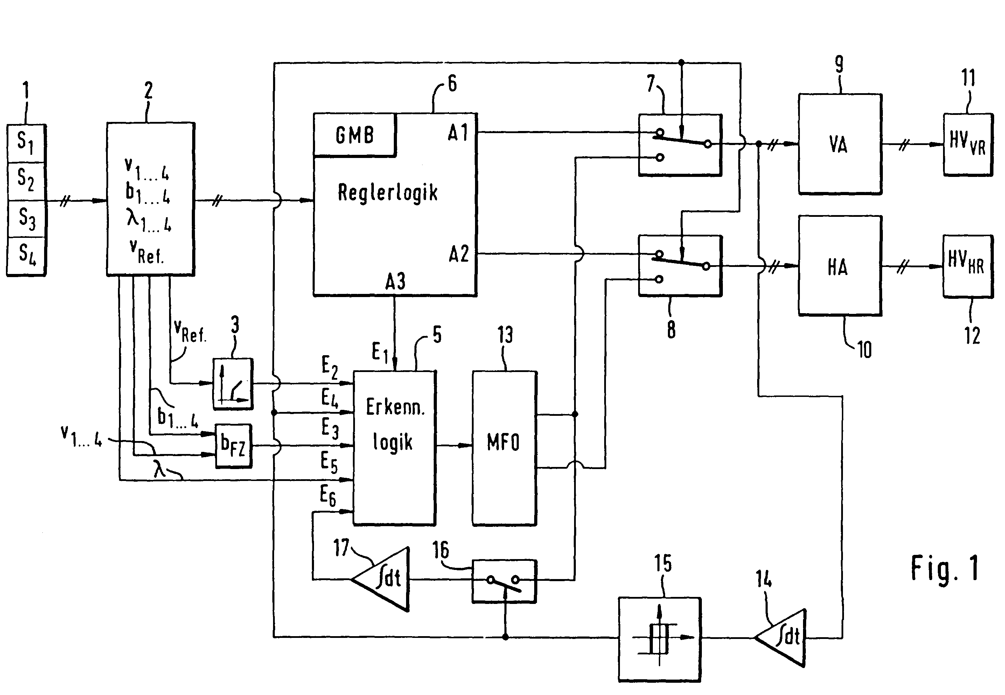

Zur Erläuterung des prinzipiellen Aufbaus und der Wirkungsweise einer Schaltungsanordnung nach der Erfindung dient Fig. 1. Es ist dies die schematisch vereinfachte Blockdarstellung des elektronischen Teils eines Blockierschutzregelungssystems nach der Erfindung. Ein Block 1 symbolisiert Radsensoren S₁ bis S₄, mit denen in bekannter Weise das Drehverhalten der einzelnen Fahrzeugräder ermittelt wird. Die Ausgangssignale der Sensoren S₁ bis S₄ geben die Geschwindigkeiten der einzelnen Räder wieder. In einem Schaltblock 2 werden die Signale aufbereitet und Radgeschwindigkeitssignale v₁ bis v₄ gebildet. Außerdem werden in dem Schaltblock 2 die Fahrzeugreferenzgeschwindigkeit v_{Ref}, Radbeschleunigungssignale b₁ bis b₄, Schlupfwerte λ₁ bis λ₄ und ggf. noch andere Größen ermittelt bzw. errechnet.

In einem Schaltkreis 3 wird ein von der momentanen Fahrzeug(referenz)geschwindigkeit v_{Ref} abhängiges Signal E₂ abgeleitet.

In einem weiteren Schaltkreis 4 wird in dem vorliegenden Ausführungsbeispiel der Erfindung ein Fahrzeugverzögerungssignal b_{FZ} durch logische Verknüpfung der Verzögerungssignale b₁ bis b₄ der einzelnen Fahrzeugräder unter Berücksichtigung der Radgeschwindigkeiten v₁ bis v₄ gebildet. Das Ausgangssignal E₃ des Schaltkreises 4 wird ebenso wie E₂ und die nachstehend erläuterten Signale E₁,E₄,E₅,E₆ einer Erkennungslogik 5 zugeführt; das Eingangssignal E₅ informiert die Erkennungslogik 5 über die momentane Höhe des Schlupfes λ₁, λ₂ der Vorderräder.

In einem Schaltblock 6 ist bei der Schaltungsanordnung nach Fig. 1 die eigentliche Regellogik untergebracht, die nach komplexen Rechenregeln, in denen die für ein Regelungssystem wesentliche Regelungsphilosphie ihren Niederschlag findet, Bremsdruck- bzw. Bremsventil-Steuersignale erzeugt. Natürlich kann eine solche Regellogik, ebenso wie die übrigen Schaltblöcke und Schaltungsbestandteile der Schaltungsanordnung nach Fig. 1, auch durch eine entsprechende Programmstruktur eines Mikroprozessors oder Mikrocontrollers realisiert werden.

Die Regellogik 6 enthält im allgemeinen mehrere Funktionsblöcke oder Programmteile; im vorliegenden Fall ist u.a. eine sogen. Giermomentenbeschränkung GMB vorhanden, die bei unterschiedlichen Reibbeiwerten rechts/links den Bremsdruckanstieg auf der Seite des höheren Reibbeiwertes verzögert.

An Ausgänge A1,A2 der Regellogik 6 sind bei der Schaltungsanordnung nach Fig. 1 über Umschalter 7,8 Ventilansteuerungen 9,10 angeschlossen. Diese Ventilansteuerungen 9,10 enthalten Endstufen, mit deren Ausgangssignale schließlich Hydraulikventile 11,12 in den hydraulischen Bremskreisen einer blockiergeschützten Bremsanlage (ABS) angesteuert werden. In dem Ausführungsbeispiel nach Fig. 1 sind die Komponenten und Signalleitungen, die zu den Radbremsen der Vorderräder (7,9,11) und zu den Radbremsen der Hinterräder (8,10,12) führen, getrennt dargestellt, weil die erfindungsgemäße Sonderregelung (MFO) in erster Linie vom Drehverhalten der Vorderräder abhängig ist.

Ein weiterer Ausgang A3 der Regellogik 6 führt zu der Erkennungslogik 5. Dieser Schaltkreis 5 dient vor allem zur UND-Verknüpfung der über die Eingänge E₁ bis E₆ zugeführten Signale. Sind die vorgesehenen Bedingungen erfüllt, wird über einen Schaltkreis 13 die Sonderregelung MFO (Mü-Flecken-Option) ausgelöst oder vorbereitet. Der Schaltkreis 13 kann allerdings erst dann die Ansteuerung der Hydraulikventile 11 in den Vorderradbremskreisen und ggf. auch der Hydraulikventile 12 in den Hinterradbremskreisen übernehmen, nachdem die Schalter 7,8 umgeschaltet sind.

Der Bremsdruck in den Vorderradbremsen wird mit Hilfe eines Integrators 14, dessen Ausgang zu einem Schwellwertschalter 15 führt, ermittelt und bewertet. Für das Starten der Sonderregelung MFO interessiert die Differenz der in die Vorderradbremsen eingesteuerten Bremsdrücke oder, dies ist eine besonders gut auswertbare Meßgröße, die Differenz der Bremsdruckabbauzeiten an den Vorderrädern. Zur Bestimmung dieser Regelgröße werden daher radindividuell die Ansteuerzeiten der Bremsdruckabbauventile, die zu den beiden Vorderradbremsen gehören, erfaßt. Der Schwellwertschalter 15 signalisiert das Überschreiten eines vorgegebenen Bremsdruck-Grenzwertes p₀. Aus dem Vorzeichen des Schwellwertgeber-Ausgangssignals ist erkennbar, welches der beiden Vorderräder den höheren bzw. niedrigeren Bremsdruck führt. Daraus ist wiederum abzuleiten, welches Vorderrad auf dem höheren bzw. niedrigeren Reibbeiwert läuft.

Beim Überschreiten des vorgegebenen Bremsdruckdifferenz-Grenzwertes p₀ bewirkt das Ausgangssignal des Schwellwertschalters 15 die Umschaltung der Schalter 7,8, so daß nunmehr über den Schaltkreis 13 die Sonderregelung MFO - wenn auch die übrigen Bedingungen erfüllt sind - ausgelöst werden kann. Durch diese Sonderregelung MFO wird, wie nachstehend erläutert, Bremsdruck aus der Radbremse des HM-Vorderrades und auch aus den Hinterradbremsen abgeleitet.

Die von der Sonderregelung (MFO) 13 ausgelösten Bremsdruckabbausignale werden nach Fig. 1, sobald ein Schalter 16 geschlossen ist, gezählt bzw. mit Hilfe eines Integrators 17 erfaßt. Das Ergebnis wird über den Eingang E₆ der Erkennungslogik 5 übermittelt, weil u.a. auch die Zeitdauer des Druckabbaues am LM-Rad zu den Kriterien für die Erkennung einer kritischen Fahrsituation und für die Auslegung der Sonderregelung dient.

Fig. 1 ist zum leichteren Verständnis der Erfindung schematisch vereinfacht dargestellt. Es sind nur die Bestandteile, Logikblöcke, Schalter usw. symbolisch dargestellt, die für das Verständnis der Sonderregelung erforderlich sind. Auch ist zu beachten, daß die beschriebenen Schaltkreise, Signalleitungen usw., auch wenn nicht ausdrücklich angegeben, die Zustands-Regelgrößen radindividuell erfassen.

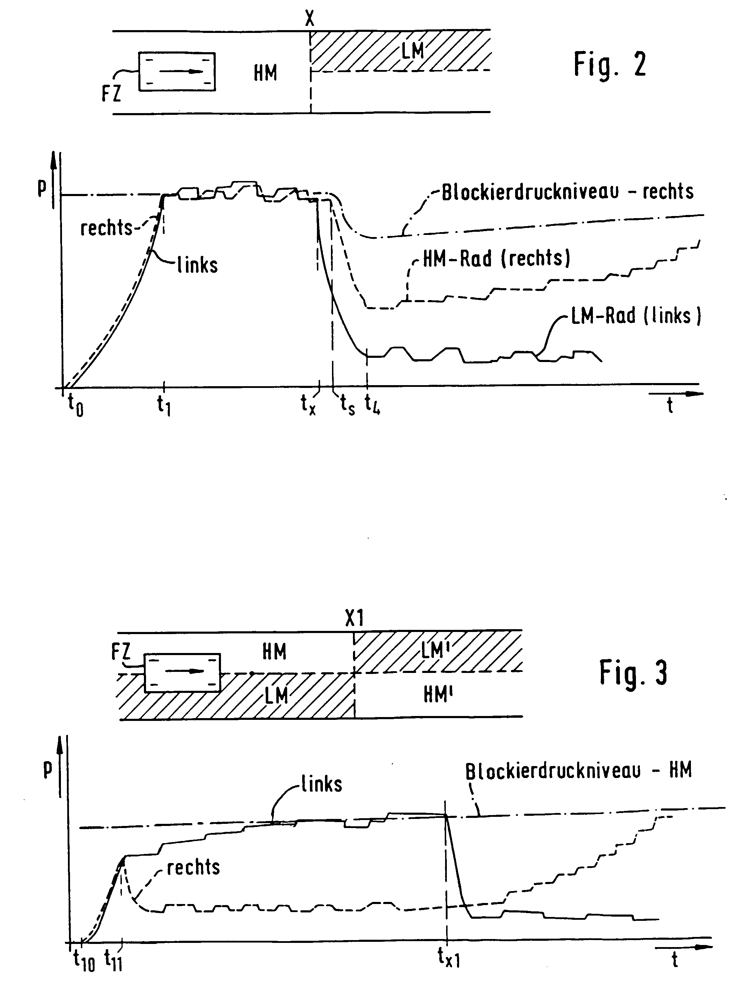

Zur näheren Erläuterung der erfindungsgemäßen, durch festverdrahtete Schaltkreise oder durch eine Programmstruktur verwirklichten Schaltungsanordnung nach Fig. 1 dienen die Diagramme in den Fig. 2 und 3. Oberhalb der Diagramme ist symbolisch angedeutet, daß sich Fig. 2 auf eine Fahrsituation bezieht, in der ein Fahrzeug FZ am Ort X von einer Fahrbahn mit hohem Reibbeiwert in eine µ-split-Fahrbahn einläuft. Nach Fig. 3 handelt es sich dagegen um eine sogen. µ-Flecken-Fahrbahn, bei der sich, sobald das Fahrzeug den Ort X1 passiert, die Reibbeiwertverhältnisse HM/LM von rechts nach links sehr stark ändern bzw. ins Gegenteil verkehren.

Fig. 2 und 3 zeigen den Druckverlauf am rechten und linken Vorderrad des Fahrzeugs FZ während eines Bremsvorganges. Aus Fig. 2 ist zu erkennen, daß etwa zum Zeitpunkt t₁ der Bremsdruck in beiden Vorderrädern des Fahrzeugs FZ, das sich auf einer Fahrbahn mit hohem, homogenem Reibbeiwert, also auf einer HM-Fahrbahn befindet, Blockierdruckniveau erreicht. Während einer solchen Regelbremsung gelangt das Fahrzeug zum Zeitpunkt tₓ auf eine µ-split-Fahrbahn und damit in eine besonders kritische Fahrsituation. Zum Zeitpunkt tₓ beginnt infolge der Blockierschutzregelung ein schneller Druckabbau am linken Vorderrad, das sich nun auf einer Fahrbahn mit niedrigem Reibbeiwert befindet und somit das LM-Rad ist. Zum Zeitpunkt tₛ erkennt der Regler, daß eine besonders kritische Fahrsituation vorliegt; es sind zu diesem Zeitpunkt folgende Kriterien erfüllt:
- Die Bremsdruckabbauzeiten-Differenz an den beiden Vorderrädern des Fahrzeugs FZ überschreitet einen Grenzwert,
- die Fahrzeug(referenz)geschwindigkeit v_{Ref} ist hoch und liegt über einem vorgegebenen Grenzwert,
- der Schlupf des LM-Rades überschreitet einen Schlupf-Grenzwert,
- die Zeitdauer der Instabilität des LM-Rades überschreitet eine bestimmte vorgegebene Zeitdauer,
- das HM-Rad, nämlich das rechte Rad in Fig. 2, befindet sich im Regelmodus,
- es fand während dieses Regelvorganges (der zum Zeitpunkt t₁ begann) noch keine Sonderregelung statt.

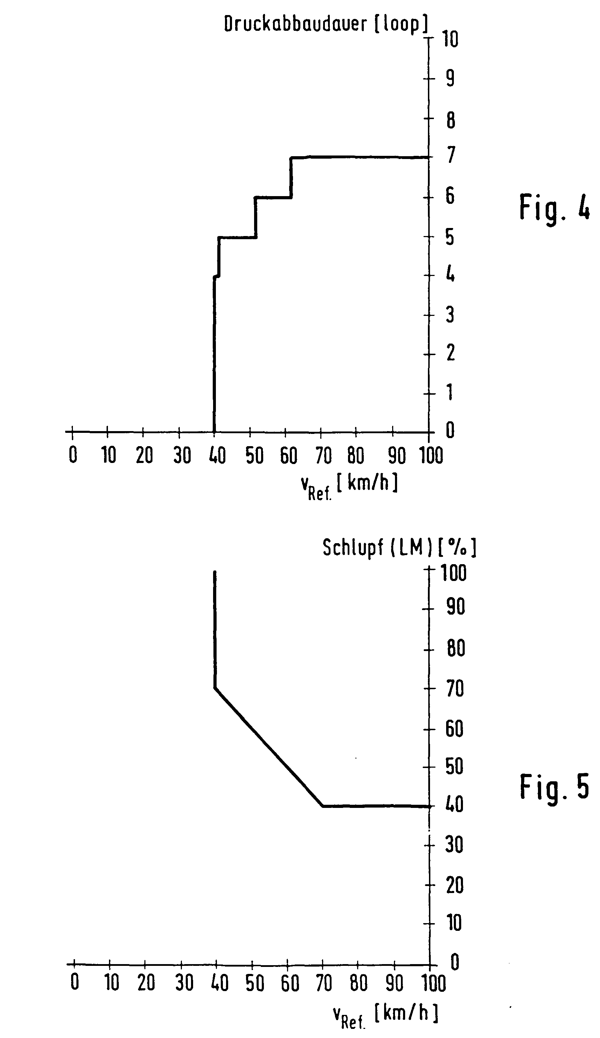

Die Sonderregelung MFO führt nun dazu, daß beginnend zum Zeitpunkt t_{S} der Druck am rechten (HM)-Rad für eine vorgegebene, von der momentanen Fahrzeug(referenz)geschwin- keit abhängigen Zeitspanne von z.B. 40 msec (vgl. Fig. 4)abgebaut wird. Nach Ablauf dieser Zeitspanne setzt ein erneuter, verlangsamter Bremsdruckaufbau am HM-Rad ein, so daß sich der Bremsdruck am HM-Rad mit einem vorgegebenen Gradienten dem Blockierdruckniveau dieses Rades, das strichpunktiert in Fig. 2 eingetragen ist, wieder annähert. Zusätzlich kann, was der besseren Übersichtlichkeit wegen in Fig. 2 nicht dargestellt ist, gleichzeitig mit dem Druckabbau am HM-Rad ein Druckabbau an der Hinterachse herbeigeführt werden, um die Seitenführung und damit die Stabilität des Fahrzeugs noch weiter zu erhöhen. Da im allgemeinen der Bremsdruck in den Hinterradbremsen nach "select-low" geregelt wird, wird gleichzeitig der Bremsdruck an beiden Hinterrädern reduziert.

Bei einer (Sonder-)Regelung der erfindungsgemäßen Art, die auf einer Bremsdruckabsenkung am HM-Rad beruht, muß sichergestellt sein, daß eindeutig zwischen dem Vorliegen einer bestimmten, besonders kritischen Fahrsituation und ähnlichen Erscheinungen infolge von speziellen Straßenbelägen, Kopfsteinpflaster, Schlechtweg-Strecken usw. unterschieden wird. Bei dem hier beschriebenen Ausführungsbeispiel der Erfindung wird daher das Auslösen der Sonderregelung unterbunden, wenn während eines Bremsmanövers eine sehr hohe Wiederbeschleunigung des LM-Rades von z.B. 8 g ("g" = 9,81 m/s²) festgestellt wird. Tritt während einer Sonderregelung eine Wiederbeschleunigung auf, die über einem zweiten, noch höheren Grenzwert von z.B. 20 g liegt, wird sofort die Sonderregelung abgebrochen. Dies sind nur einige der denkbaren Kriterien zum Unterscheiden einer wirklich kritischen von einer scheinbar kritischen Fahrsituation.

Fig. 3 zeigt den Bremsdruckverlauf an den Vorderrädern auf einer µ-Flecken-Fahrbahn. Zum Zeitpunkt t₁₀ setzt der Bremsvorgang ein, zum Zeitpunkt t₁₁ die Regelung am rechten Vorderrad, das zu diesem Zeitpunkt das LM-Rad ist. Zur Giermomentenbegrenzung wird durch die GMB ab dem Zeitpunkt t₁₁ ein weiterer Bremsdruckanstieg am HM-Rad unterbunden oder verlangsamt. Zum Zeitpunkt tₓ₁ gelangt das bisher auf der HM-Seite laufende Rad auf eine Fahrbahn mit niedrigem Reibbeiwert (LM'). Auf der anderen Fahrbahnseite ändert sich der Reibbeiwert von LM zu HM'. Da bereits zum Zeitpunkt tₓ₁ die Bremsdruckabbauzeiten-Differenz an beiden Vorderrädern den vorgegebenen Grenzwert überschritten hat und auch alle anderen Kriterien erfüllt sind, setzt die Sonderregelung MFO ein. Der Bremsdruck am (bisherigen) HM-Rad wird durch Ansteuerung der Bremsdruck-Abbauventile für eine vorgegebene, von der Fahrzeug(referenz)geschwindigkeit abhängigen Zeitspanne rasch abgebaut. An der Radbremse des rechten Vorderrades, das vom niedrigen Reibbeiwert (LM) auf die Hochreibwert-Fahrbahn (HM') gelangte, wird der Bremsdruck mit vorgegebenem Gradienten aufgebaut bzw. dem Blockierdruckniveau angenähert.

Im übrigen gelten für die Situation nach Fig. 3 die gleichen Kriterien und Druckbeeinflussungsmaßnahmen wie in der Situation nach Fig. 2.

Fig. 4 zeigt ein Beispiel für die Abhängigkeit der vorgegebenen Druckabbaudauer von der Fahrzeugreferenzgeschwindigkeit. Unterhalb von 40 km/h findet kein Druckabbau durch die Sonderregelung (MFO) statt. Die Druckabbaudauer erstreckt sich anfangs, d.h. beim Überschreiten der 40 km/h-Marke, über fünf Loops hin und wird bis auf einen Maximalwert von sieben Loops ausgedehnt. Die Dauer eines Loop liegt beispielsweise in der Größenordnung von 5 bis 10 msec.

Fig. 5 gibt die Abhängigkeit der Schlupf-Schwelle von der Fahrzeugreferenzgeschwindigkeit wieder. Ein Kriterium für das Vorliegen einer besonders kritischen Fahrsituation und für die Auslösung der Sonderregelung ist dann erfüllt, wenn der Schlupf des LM-Rades über dem geschwindigkeitsabhängigen Grenzwert liegt. Beispielsweise muß der Schlupf nach Fig. 5 im Fahrzeuggeschwindigkeits-Bereich zwischen 70 und 100 km/h über 40% liegen.

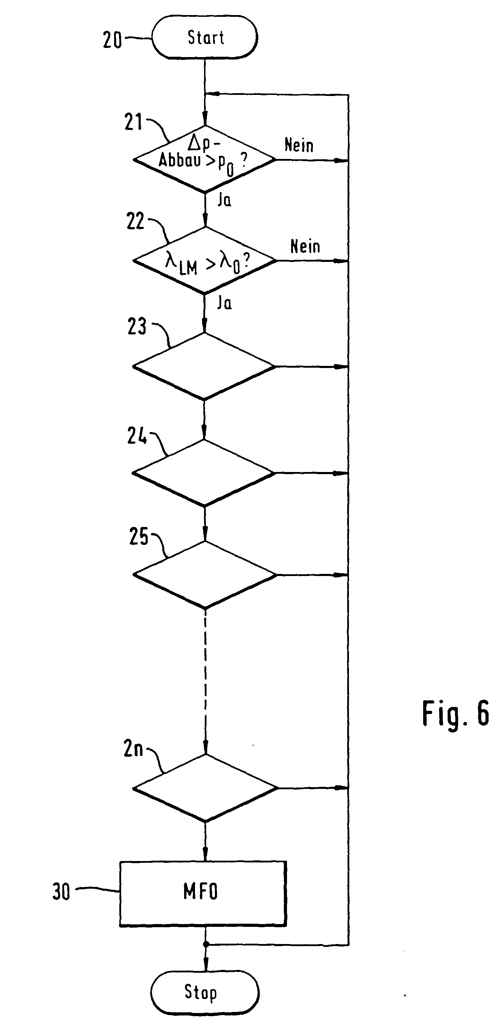

In Fig. 6 ist die Verknüpfung verschiedener Kriterien in Form eines Flow-Charts wiedergegeben. Auf Basis einer solchen Verknüpfung der einzelnen Funktionen läßt sich bei Realisierung der Erfindung mit Hilfe von programmierten Schaltungen, wie Mikrocomputer, Mikrocontroller usw., ein Unterprogramm für den Start der erfindungsgemäßen Sonderregelung (MFO) entwikkeln.

In einem Schritt 20 wird das Unterprogramm gestartet. Es folgen darauf im Programmlauf eine Reihe von Verzweigungsstellen 21,22... 2n, in denen nur dann der Programmfluß fortgesetzt wird, wenn jeweils eine bestimmte Bedingung bzw. ein bestimmtes Kriterium erfüllt ist ("ja"). Ist das Kriterium nicht gegeben ("nein"), wird der Programmlauf wieder zur Startstelle zurückgeführt. Beispielsweise ist die Entscheidung in der Verzweigung 21 davon abhängig, ob die Bremsdruckabbaudifferenz (Δp-Abbau) einen vorgegebenen Grenzwert p₀ überschritten hat. In der Verzweigung 22 wird gefragt, ob der Schlupf des LM-Rades (λ_{LM}) den Schlupf-grenzwert (λ₀) überschritten hat. Wenn "nein", wird in beiden Fällen die Schleife an den Anfangspunkt zurückgeführt, wenn "ja" folgt der nächste Schritt. Schließlich wird, wenn alle zuvor abgefragten Kriterien erfüllt sind, in einem Schritt 30 die Sonderregelung (MFO) ausgelöst.

## Patentansprüche

1. Schaltungsanordnung zur Erhöhung der Fahrstabilität in kritischen Fahrsituationen, für eine Kraftfahrzeug-Bremsanlage mit elektronischer Blockierschutzregelung,
- mit Schaltkreisen zur individuellen Regelung des Bremsdruckes in den Radbremsen der Vorderräder in Abhängigkeit von dem Drehverhalten der Räder,
- mit Schaltkreisen zur Beschränkung des infolge von Bremsmanövern auf Fahrbahnen mit unterschiedlichem Reibbeiwert rechts/links, sogenannten µ-split-Fahrbahnen auftretenden Giermomenten, dadurch **gekennzeichnet,**
- daß in bestimmten kritischen Fahrsituationen, insbesondere bei µ-Sprung-Fahrmanövern, d.h. beim Einlauf in eine µ-split-Fahrbahn, oder bei Bremsmanövern auf µ-Flecken-Fahrbahnen und
- Erkennen von vorgegebenen Kriterien für eine solche kritische Fahrsituation
- eine Sonderregelung (MFO) gestartet wird, die einen Bremsdruckabbau in der Radbremse des zu diesem Zeitpunkt auf dem höheren Reibbeiwert laufenden Vorderrades, des sogenannten "HM-Rades", für eine vorgegebene, von der Fahrzeuggeschwindigkeit oder Fahrzeugreferenzgeschwindigkeit abhängige Zeitdauer herbeiführt.

2. Schaltungsanordnung nach Anspruch 1, dadurch **gekennzeichnet,** daß die Sonderregelung (MFO) einen Druckabbau in den Radbremsen der Hinterräder für eine vorgegebene Zeitdauer oder bis auf einen vorgegebenen Druckwert herbeiführt.

3. Schaltungsanordnung nach Anspruch 1 oder 2, dadurch **ge** **kennzeichnet,** daß die Fahrsituation als kritisch bewertet bzw. erkannt wird, wenn eine oder mehrere der folgenden Kriterien gleichzeitig erfüllt sind:
- Die Bremsdruckdifferenz bzw. die Bremsdruckabbauzeiten-Differenz an den Vorderrädern überschreitet einen vorgegebenen Bremsdruckdifferenz-Grenzwert (p₀)
- die Fahrzeuggeschwindigkeit oder Fahrzeugreferenzgeschwindigkeit liegt über einem vorgegebenen Geschwindigkeits-Grenzwert,
- der Schlupf des auf der Seite mit niedrigerem Reibbeiwert laufenden Vorderrades, des sogen. "LM-Rades", liegt über einem von der Fahrzeug(referenz)geschwindigkeit abhängigen Schlupf-Grenzwert (λo),
- die Zeitdauer des Instabilität des LM-Rades überschreitet eine vorgegebene Zeitdauer,
- das HM-Rad befindet sich im Regelungs-Modus oder die Fahrzeugverzögerung liegt über einem vorgegebenen Verzögerungs-Grenzwert und es fand während des momentanen Regelvorgangs noch keine Sonderregelung (MFO) statt.

4. Schaltungsanordnung nach Anspruch 3, dadurch **gekennzeichnet,** daß die momentane Fahrsituation nur dann als kritisch bewertet wird, wenn alle im Anspruch 3 aufgezählten Kriterien erfüllt sind.

5. Schaltungsanordnung nach einem oder mehreren der Ansprüche 1 bis 4, dadurch **gekennzeichnet,** daß die Sonderregelung (MFO) während eines Bremsmanövers beim erneuten Erkennen einer kritischen Fahrsituation oder Andauern der kritischen Fahrsituation wiederholt wird, wenn zuvor die Bremsdruckdifferenz bzw. die Bremsdruckabbauzeitendifferenz dem vorgegebenen Grenzwert mit umgekehrten Vorzeichen überschritten hat bzw. wenn ein Wechsel der Reibbeiwertverhältnisse rechts/links eingetreten ist.

6. Schaltungsanordnung nach einem oder mehreren der Ansprüche 1 bis 5, dadurch **gekennzeichnet**, daß eine Auslösung einer Sonderregelung (MFO) verhindert oder eine laufende Sonderregelung (MFO) beendet wird, wenn während des Bremsmanövers eine über einem vorgegebenen ersten Wiederbeschleunigungs-Grenzwert liegende Wiederbeschleunigung des LM-Rades ermittelt wird.

7. Schaltungsanordnung nach Anspruch 6, dadurch **gekennzeichnet,** daß der vorgegebene erste Wiederbeschleunigungsgrenzwert auf einen Wert im Bereich zwischen 5 und 10 g ("g" = Erdbeschleunigungskonstante) festgelegt wird.

8. Schaltungsanordnung nach einem oder mehreren der Ansprücne 1 bis 7, dadurch **gekennzeichnet**, daß die Sonderregelung (MFO) unterbrochen wird, wenn eine oder mehrere der vorgegebenen Kriterien für das Erkennen einer kritischen Fahrsituation nicht mehr erfüllt sind.

9. Schaltungsanordnung nach einem oder mehreren der Ansprüche 1 bis 8, dadurch **gekennzeichnet**, daß die Sonderregelung (MFO) beendet wird, wenn während der Sonderregelung eine Wiederbeschleunigung des LM-Rades, die über einen vorgegebenen, relativ hohen zweiten Wiederbeschleunigungsgrenzwert, der in der Größenordnung zwischen 10 und 30 g liegt, auftritt.

10. Schaltungsanordnung nach einem oder mehreren der Ansprüche 1 bis 9, dadurch **gekennzeichnet,** daß die Zeitdauer des Bremsdruckabbaues infolge der Sonderregelung (MFO) bei einer Fahrzeuggeschwindigkeit in der Größenordnung zwischen 30 und 50 km/h auf einen Wert zwischen 20 und 40 msec vorgegeben ist und bei höheren Geschwindigkeiten in Stufen oder kontinuierlich bis auf Werte zwischen 50 bis 70 msec erhöht wird.

11. Schaltungsanordnung nach einem oder mehreren der Ansprüche 2 bis 10, dadurch **gekennzeichnet,** daß der Schlupf-Grenzwert (λ₀) bei einer Fahrzeuggeschwindigkeit von etwa 40 km/h auf einen Wert zwischen 60 und 70% festgelegt und mit höherer Geschwindigkeit linear oder in Stufen bis auf einen Schlupf-Grenzwert von etwa 40% reduziert wird.

12. Blockierschutzregelungssystem (ABS), mit einer hydraulischen Bremsanlage, mit elektrisch betätigbaren Hydraulikventilen, mit Sensoren zur Ermittlung des Drehverhaltens der Fahrzeugräder und mit einem elektronischen Regler, der programmgesteuerte Schaltungen enthält, die zur Auswertung der Sensorsignale und zur Erzeugung von Bremsdruck-Steuersignalen dienen und derart programmiert sind, daß der Bremsdruck in den Radbremsen der Vorderräder individuell in Abhängigkeit von dem Drehverhalten der Räder geregelt wird, wobei ein durch Fahrmanöver auf µ-split-Fahrbahnen hervorgerufenes Giermoment beschränkt wird, dadurch **gekennzeichnet,** daß zur Erhöhung der Fahrstabilität in bestimmten kritischen Fahrsituationen, insbesondere bei µ-Sprung-Fahrmanövern bzw. beim Einlauf in eine µ-split-Fahrbahn oder bei Bremsmanövern auf µ-Flecken - Fahrbahnen und Erkennen von vorgegebenen Kriterien für eine solche kritische Fahrsituation eine Sonderregelung (MFO) gestartet wird, die einem Bremsdruckabbau in der Radbremse des zu diesem Zeitpunkt den höheren Bremsdruck aufweisenden Vorderrades, des sogenannten "HM-Rades", für eine vorgegebene, von der Fahrzeuggeschwindigkeit oder Fahrzeugreferenzgeschwindigkeit abhängige Zeitdauer herbeiführt.

13. Blockierschutzregelungssystem (ABS) nach Anspruch 12, dadurch **gekennzeichnet,** daß die Sonderregelung einen Bremsdruckabbau an den Hinterrädern herbeiführt.

## Claims

1. Circuit arrangement for an automotive vehicle brake system with electronic anti-lock control to enhance the driving stability in critical driving situations, including
- circuits for the individual control of the braking pressure in the wheel brakes of the front wheels in response to the rotational behavior of the wheels,
- circuits for the limitation of yawing torques which occur due to braking maneuvers on road surfaces having a different friction coefficient on the right/left sides, so-called µ-split road surfaces,
**characterized** in that
- in defined critical driving situations, in particular during driving maneuvers with an abrupt change in µ-conditions, i.e. when passing into a µ-split road surface, or during braking maneuvers on µ-patch road surfaces, and
- upon identifying predetermined criteria for such a critical driving situation,
- a special control (MFO) is initiated which causes a braking pressure reduction in the wheel brake of the front wheel having the higher coefficient of friction at this point of time, the so-called "HM-wheel", for a predetermined period of time which is responsive to the vehicle speed or vehicle reference speed.

2. Circuit arrangement as claimed in claim 1,
**characterized** in that the special control (MFO) effects a pressure reduction in the wheel brakes of the rear wheels for a predetermined time or up to a predetermined pressure value.

3. Circuit arrangement as claimed in claim 1 or 2,
**characterized** in that the driving situation is assessed or identified as critical if one or a plurality of the following criteria are simultaneously satisfied:
- The braking pressure difference or the difference in braking pressure reduction times on the front wheels exceeds a predetermined braking pressure difference limit value (p₀).
- The vehicle speed or vehicle reference speed ranges above a predetermined speed limit value.
- The slip of the low coefficient side front wheel, the so-called "LM-wheel", ranges above a slip limit value (λo) which is responsive to the vehicle (reference) speed.
- The duration of the instability of the LM-wheel exceeds a predetermined time.
- The HM-wheel is in the control mode, or the vehicle deceleration is above a predetermined deceleration limit value, and special control (MFO) has not yet taken place during the instantaneous control action.

4. Circuit arrangement as claimed in claim 3,
**characterized** in that the instantaneous driving situation is assessed as critical only if all criteria listed in claim 3 are satisfied.

5. Circuit arrangement as claimed in any one or more of claims 1 to 4,
**characterized** in that the special control (MFO) during a braking maneuver is repeated when a critical driving situation is identified once more or the critical driving situation continues, if priorly the braking pressure difference or the difference in braking pressure reduction times has exceeded the predetermined limit value with reversed signs or if there occurred a change in the coefficient of friction conditions right/left.

6. Circuit arrangement as claimed in any one or more of claims 1 to 5,
**characterized** in that initialization of the special control (MFO) is prevented or a current operation of the special control (MFO) is terminated when re-acceleration of the LM-wheel, which is above a predetermined first acceleration limit value, is identified during a braking maneuver.

7. Circuit arrangement as claimed in claim 6,
**characterized** in that the predetermined first re-acceleration limit value is set to a value in the range of 5 to 10 g ("g" is the constant of acceleration due to gravity).

8. Circuit arrangement as claimed in any one or more of claims 1 to 7,
**characterized** in that the special control (MFO) is interrupted when one or a plurality of the predetermined criteria for the identification of a critical driving situation are no longer satisfied.

9. Circuit arrangement as claimed in any one or more of claims 1 to 8,
**characterized** in that the special control (MFO) is terminated when re-acceleration of the LM-wheel occurs during the special control which is in excess of a predetermined, relatively high second re-acceleration limit value that is in the order of 10 to 30 g.

10. Circuit arrangement as claimed in any one or more of claims 1 to 9,
**characterized** in that the duration of braking pressure reduction caused by the special control (MFO) at a vehicle speed ranging from 30 to 50 km/h is predetermined to a value between 20 and 40 msec and is increased in steps or continuously up to values ranging from 50 to 70 msec at higher speeds.

11. Circuit arrangement as claimed in any one or more of claims 2 to 10,
c**haracterized** in that the slip limit value (λ₀) is set to a value between 60 and 70 % at a vehicle speed of 40 km/h approximately and is reduced linearly or in steps at higher speeds until a slip limit value of about 40 %.

12. Anti-lock control system (ABS) including a hydraulic brake system, electrically operable hydraulic valves, sensors to determine the rotational behavior of the vehicle wheels and an electronic controller comprising programmed circuits which are used to evaluate the sensor signals and to generate braking pressure control signals and are programmed so that the braking pressure in the wheel brakes of the front wheels is controlled individually as a function of the rotational behavior of the wheels, and yawing torques caused by driving maneuvers on µ-split road surfaces are limited,
**characterized** in that a special control (MFO) is started and causes braking pressure reduction in the wheel brake of the front wheel having the higher braking pressure at this point of time, the so-called HM-wheel, for a predetermined duration which depends on the vehicle speed or vehicle reference speed in order to enhance the driving stability in defined, critical driving situations, in particular during driving maneuvers with an abrupt change in µ-conditions, i.e., when passing into a µ-split road surface, or during braking maneuvers on µ-patch road surfaces, and upon identifying predetermined criteria for such a critical driving situation.

13. Anti-lock control system (ABS) as claimed in claim 12,
**characterized** in that the special control causes a braking pressure reduction on the rear wheels.

## Revendications

1. Agencement de circuit servant à accroître la stabilité de conduite dans des situations critiques de conduite, pour un système de freinage de véhicule automobile à régulation antiblocage électronique, comprenant
- des circuits de régulation individuelle de la pression dans les freins des roues avant en fonction du comportement de rotation des roues et
- des circuits servant à limiter le couple de lacet qui apparaît sous l'effet de manoeuvres de freinage sur des voies de roulement à coefficients de frottement différents à droite/à gauche, qu'il est convenu d'appeler voies de roulement à µ dédoublé, caractérisé en ce que
- dans des situations de conduite critiques déterminées, notamment dans le cas de manoeuvres de conduite à saut de µ, c'est-à-dire lors du passage à une voie de roulement à µ dédoublé, ou dans le cas de manoeuvres de freinage sur des voies de roulement à µ en échiquier et
- lorsque sont constatés des critères préfixés pour une telle situation de conduite critique,
- une régulation spéciale (MFO) est lancée, cette régulation exécutant une diminution de pression dans le frein de la roue avant qui, à cet instant, roule avec le coefficient de frottement le plus élevé, ce qu'il est convenu d'appeler la "roue HM", pendant une durée préfixée dépendant de la vitesse du véhicule ou d'une vitesse de référence de véhicule.

2. Agencement de circuit suivant la revendication 1, caractérisé en ce que la régulation spéciale (MFO) exécute une diminution de pression dans les freins des roues arrière pendant une durée préfixée ou jusqu'à une valeur de pression préfixée.

3. Agencement de circuit suivant la revendication 1 ou 2, caractérisé en ce que la situation de conduite est évaluée ou reconnue comme étant critique si un ou plusieurs des critères suivants sont simultanément remplis :
- la différence de pression de frein ou la différence de durée de diminution de pression de frein sur les roues avant dépasse une valeur limite de différence de pression de frein (p₀) préfixée,
- la vitesse de véhicule ou vitesse de référence de véhicule est supérieure à une valeur limite de vitesse préfixée,
- le glissement de la roue avant roulant du côté à coefficient de frottement plus faible, qu'il est convenu d'appeler "roue LM", est supérieur à une valeur limite de glissements (λ₀) dépendant de la vitesse (de référence) de véhicule,
- la durée de l'instabilité de la roue LM dépasse une durée préfixée,
- la roue HM se trouve en mode de régulation ou la décélération du véhicule est supérieure à une valeur limite de décélération préfixée et une régulation spéciale (MFO) n'a pas encore eu lieu pendant l'opération de régulation momentanée.

4. Agencement de circuit suivant la revendication 3, caractérisé en ce que la situation de conduite momentanée n'est évaluée comme étant critique que lorsque tous les critères énumérés à la revendication 3 sont remplis.

5. Agencement de circuit suivant une ou plusieurs des revendications 1 à 4, caractérisé en ce que la régulation spéciale (MFO) pendant une manoeuvre de freinage est reproduite, dans le cas d'une nouvelle constatation d'une situation de conduite critique ou du prolongement de la situation de conduite critique, si au préalable la différence de pressions de frein ou la différence de durées de diminution de pression de frein a dépassé la valeur limite préfixée avec un signe opposé ou si un changement des rapports de coefficient de frottement droite/gauche a eu lieu.

6. Agencement de circuit suivant une ou plusieurs des revendications 1 à 5, caractérisé en ce qu'un déclenchement d'une régulation spéciale (MFO) est empêché, ou il est mis fin à une régulation spéciale (MFO) en cours de déroulement, si, pendant la manoeuvre de freinage, il est relevé une réaccélération de la roue LM qui est supérieure à une première valeur limite de réaccélération préfixée.

7. Agencement de circuit suivant la revendication 6, caractérisé en ce que la première valeur limite de réaccélération préfixée est fixée à une valeur située dans la fourchette comprise entre 5 et 10 g ("g" = constante d'accélération de la pesanteur).

8. Agencement de circuit suivant une ou plusieurs des revendications 1 à 7, caractérisé en ce que la régulation spéciale (MFO) est interrompue lorsqu'un ou plusieurs des critères préfixés pour la reconnaissance d'une situation de conduite critique ne sont plus remplis.

9. Agencement de circuit suivant une ou plusieurs des revendications 1 à 8, caractérisé en ce qu'il est mis fin à la régulation spéciale (MFO) lorsque, pendant la régulation spéciale, il se présente une réaccélération de la roue LM qui est supérieure à une seconde valeur limite de réaccélération préfixée, relativement élevée, qui est de l'ordre de 10 à 30 g.

10. Agencement de circuit suivant une ou plusieurs des revendications 1 à 9, caractérisé en ce que la durée de la diminution de pression de frein sous l'effet de la régulation spéciale (MFO) est préfixée, pour une vitesse de véhicule de l'ordre de 30 à 50 km/h, à une valeur comprise entre 20 et 40 ms et, pour des vitesses plus élevées, elle est augmentée, d'une manière étagée ou d'une manière continue, jusqu'à des valeurs comprises entre 50 et 70 ms.

11. Agencement de circuit suivant une ou plusieurs des revendications 2 à 10, caractérisé en ce que la valeur limite de glissement (λ₀) est fixée, pour une vitesse de véhicule d'approximativement 40 km/h, à une valeur comprise entre 60 et 70% et, pour une vitesse plus élevée, cette valeur est réduite, d'une manière linéaire ou d'une manière étagée, jusqu'à une valeur limite de glissement d'approximativement 40%.

12. Système de régulation antiblocage (ABS), comprenant un dispositif de freinage hydraulique, des valves hydrauliques à commande électrique, des capteurs servant à relever le comportement en rotation des roues de véhicule et un régulateur électronique qui contient des circuits à commande par programme, qui servent à analyser les signaux de capteur et à produire des signaux de commande de pression de frein et sont programmés d'une manière telle que la pression dans les freins des roues avant fait l'objet d'une régulation d'une manière individuelle en fonction du comportement en rotation des roues, de sorte qu'un couple de lacet provoqué par une manoeuvre de conduite sur des voies de roulement à µ. dédoublé est limité, caractérisé en ce que, pour accroître la stabilité de conduite, dans des situations de conduite critiques déterminées, notamment dans le cas de manoeuvres de conduite à saut de µ, plus précisément lors du passage à une voie de roulement à µ dédoublé, ou dans le cas de manoeuvres de freinage sur des voies de roulement à µ en échiquier et lorsque sont constatés des critères préfixés pour une telle situation de conduite critique, une régulation spéciale (MFO) est lancée, cette régulation exécutant une diminution de pression dans le frein de la roue avant qui, à cet instant, présente la pression de frein la plus élevée, ce qu'il est convenu d'appeler la "roue HM", pendant une durée préfixée dépendant de la vitesse du véhicule ou d'une vitesse de référence de véhicule.

13. Système de régulation antiblocage (ABS) suivant la revendication 12, caractérisé en ce que la régulation spéciale exécute une diminution de pression de frein sur les roues arrière.
